# EUROPEAN PATENT APPLICATION

(11) **EP 2 383 960 A1**
(43) Date of publication of application: **02.11.2011**
(21) Application number: 10305459.9
(22) Date of filing: 29.04.2010
(51) Int. Cl.: H04L 29/08

(54) **Method of managing the installation of an application in a telecom device**

(71) Applicant: Gemalto SA, 92190 Meudon (FR)
(72) Inventor: Foesser, M. Christophe, La Ciotat, 13600 (FR)
(74) Representative: Grevin, Emmanuel

(57) **Abstract**

The invention is a method for installing an application in a telecom device from a server. The telecom device comprises a secure token which comprises an identity data related to a subscriber of a telecom mobile network. The server comprises a first file containing a descriptor of the application and a second file containing an executable part of the application. The method comprises the steps of:
- getting the first file in the secure token,
- generating an updated file by adding token data into the first file, the secure token data being provided by the secure token, and the generating step being performed into the secure token,
- getting the updated file in the telecom device,
- installing the application in the telecom device by using said token data.

## Description

### (Field of the invention)

The present invention relates to the methods of managing the installation of an application in a telecom device. It relates particularly to methods of managing the installation of applications which may interact with a secure token in a mobile phone.

### (Prior art)

Telecom devices are machines comprising a memory, a microprocessor, an operating system and an interface allowing wireless communications according to a Telecom channel. Telecom devices usually collaborate with an electronic secure token that provides data related to a subscriber identity. For example, a Telecom device may be a telecom handset and the secure token may be a SIM smart card.

Electronic secure tokens are small machines comprising a memory, a microprocessor and an operating system for computing treatments. In general, electronic secure tokens comprise a plurality of memories of different types. For example, they may comprise memory of RAM, ROM, EEPROM or Flash type. Electronic tokens have limited computing resources. For example, smart cards are secure electronic tokens.

A telecom handset may comprise applications which are downloaded into the handset according to user's wish or mobile network operator needs. The handset applications may be developed in Java ® language or any relevant language compliant with the operating system of the mobile phone. The mobile phone application may be named a midlet. The mobile phone may comprise an application manager which is in charge of managing installation and use of the applications into the mobile phone. The application manager may be called the application management software (AMS). According to the prior art, an application is directly downloaded from an application server into the targeted mobile phone. Such a download operation may be performed through the Over-The-Air (OTA) mechanism.

The downloaded application has no information related to the secure token which is in the mobile phone. It might be useful if the application gets information related to the characteristics of the secure token. For example, the secure token may contain a web server and the application may require information concerning the presence and the features of this web server. In order to allow interactions between the downloaded application and the secure token, there is a need for allowing the sharing of information between the secure token and the downloaded application.

### (Summary of the Invention)

An object of the invention is to solve the above mentioned technical problem.

The object of the present invention is a method for installing an application in a telecom device from a server. The telecom device comprises a secure token which comprises an identity data related to a subscriber of a telecom mobile network. The server comprises first and second files. Said first file comprises a descriptor of the application and said second file comprises an executable part of the application. The method comprises the steps of:
- getting the first file in the secure token,
- generating an updated file by adding a token data into the first file,
- getting the updated file in the telecom device,
- installing the application in the telecom device by using the token data.

The token data is provided by the secure token. The generating step is performed into the token.

Advantageously, the token data may be used for managing the application.

Advantageously, the method may comprise the step of using the token data by the application when said application runs.

In one embodiment, the method may comprise the steps of:
- extracting an address by analyzing the updated file into the telecom device,
- getting the second file into the telecom device by using said address.

Advantageously, the method may comprise the further step of sending an installation notification from the telecom device to the server via the secure token, this sending step being done after the installing step.

Advantageously, the method may comprise the step of storing in the secure token a presence data related to the installation of said application in the telecom device.

In one embodiment, the method may comprise the step of using the presence data for activating said application from the secure token.

Advantageously, the secure token may be a smart card and the token data may be related to a Smart Card Web Server.

In one embodiment, the telecom device may comprise an application manager and the application manager may perform the installing step.

Advantageously, the application may be a Java midlet, the first file may be a Java Application Descriptor file and the second file may be a Java Archive file.

Another object of the invention is a secure electronic token comprising an identity data related to a subscriber of a telecom mobile network. The secure token is intended to be connected to a telecom device. The secure token comprises a first means which is adapted for communicating with the telecom device. The secure token comprises a second means capable of communicating with a server that comprises first and second files. Said first file comprises a descriptor of an application and said second file comprises an executable part of the application. The secure token is capable of providing a token data. The secure token comprises a third means capable of generating an updated file by adding said token data into the first file. The secure token is adapted to send the updated file to the telecom device when the installation of said application is requested.

Advantageously, the secure token may be a smart card which comprises a Smart Card Web Server and the token data may be related to the Smart Card Web Server.

In a preferred embodiment, the secure token may be a SIM card or a Universal Integrated Circuit Card.

Another object of the invention is a telecom device comprising a secure electronic token according to the invention as described above. The telecom device comprises a request means capable of sending a message to the secure token when an application is to be installed in said telecom device from a server.

### (Brief description of the drawings)

Other characteristics and advantages of the present invention will emerge more clearly from a reading of the following description of a number of preferred embodiments of the invention with reference to the corresponding accompanying drawings in which:
- Figure 1 is an example of sequence of installation of an application according to prior art;
- Figure 2 depicts schematically an example of a system comprising an application server, a telecom device and a connected electronic secure token of smart card type according to the invention; and
- Figure 3 is an example of sequence of application installation according to the invention.

### (Detailed description of the preferred embodiments)

The invention may apply to any types of secure token comprising subscriber identity data and intended to be connected to telecom equipment.

The present invention relies on the fact that the secure token acts as a proxy for downloading a part of the application elements from the application server to the telecom device.

An advantage of the invention is to allow a customization of the installed application without any change in application server side.

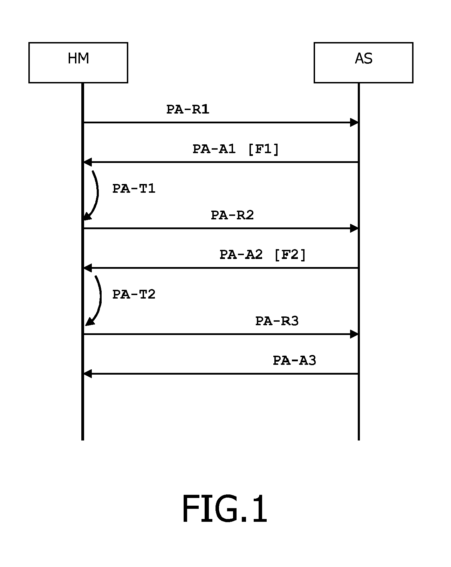

**Figure 1** shows an example of the sequence of an application installation according to prior art. The application is stored in a distant application server AS. The application will be installed into the telecom device HM. In this example, the application is a midlet written in Java ® language. The midlet is stored into the server AS thanks to two files F1 and F2. The file F1 is a JAD (Java Application Descriptor) file and the file F2 is a JAR (Java ARchive) file. The file F1 contains the location of the file F2 and attributes related to the midlet. The file F2 contains the java classes and may contain additional resources like images and sound files. The Over the Air deployment of the midlet involves uploading the two files F1 and F2 into the telecom device HM.

According to Figure 1, the telecom device HM sends a first message PA-R1 which aims at getting the first file F1. (i.e. the JAD file). For example the message PA-R1 may be based on the HTTP GET Request method. For instance, the message PA-R1 may contain the following matter:
Method=GET
URL=http://188.223.23.100/App.jad
Data=<NONE>
where "188.223.23.100" is the address of the server AS, "/App.jad" is the path on the server for the JAD file F1 and "App.jad" is the name of the file F1.

Then the server AS sends a message PA-A1 to the telecom device HM. The message PA-A1 contains the file F1. For example the message PA-A1 may contain the following matter:
MIDlet-Jar-Size: 258390
MIDlet-Name: App
MIDlet-Install-Notify:
http://188.223.23.100/install
MIDlet-Version: 1.0
MIDlet-Jar-URL: http://188.223.23.100/App.jar
where MIDlet-Jar-Size is a JAD attribute providing the size of the file F2 (i.e. size of the JAR file),
where MIDlet-Name is a JAD attribute providing the name of the application intended to be installed,
where MIDlet-Install-Notify is a JAD attribute providing the URL to be used for sending a notification of the result of the installation operation,
where MIDlet-Version is a JAD attribute providing the version number of the application,
where MIDlet-Jar-URL is a JAD attribute providing the URL where the file F2 may be retrieved.

The telecom device HM comprises an application manager which is able to analyze the content of the message PA-A1. The application manager is able to identify (treatment PA-T1) the data allowing to build a second message PA-R2 which aims at getting the second file F2. (i.e. the JAR file).

Then the message PA-R2 is sent from the device HM to the server AS.

For example the application manager may use the "MIDlet-Jar-URL" field of the file F1 for building the second message. Thus the message PA-R2 may contain the following matter:
Method=GET
URL=http://188.223.23.100/App.jar

Then the server AS sends a message PA-A2 to the telecom device HM in response to the message PA-R2. The message PA-A2 contains the file F2. Since both the JAD and the JAR files of the application are now loaded into the device HM, the application manager may fully install (treatment PA-T2) the application into the device HM.

A notification may be needed. Since the received file F1 contains a MIDlet-Install-Notify field, the device HM sends a third message PA-R3 to the server AS. The message PA-R3 aims at providing the server AS with result of the application installation operation.

For example the message PA-R3 may be based on the HTTP POST method which sends the status. For instance, the message PA-R3 may contain the following matter:
Method=POST
URL=http://188.223.23.100/install
Data='900 Success'
where "188.223.23.100" is the address of the server AS, "/install" is the notification path on the server and "900 Success" is the notification data sent to the server by the POST method.

Then the server AS sends a message PA-A3 to the telecom device HM in response to the message PA-R3. The message PA-A3 contains an acknowledgment. For example the message PA-A3 may contain the following matter:
HTTP Ok

The couple PA-R3/PA-A3 is optional and depends on the content of the file F1.

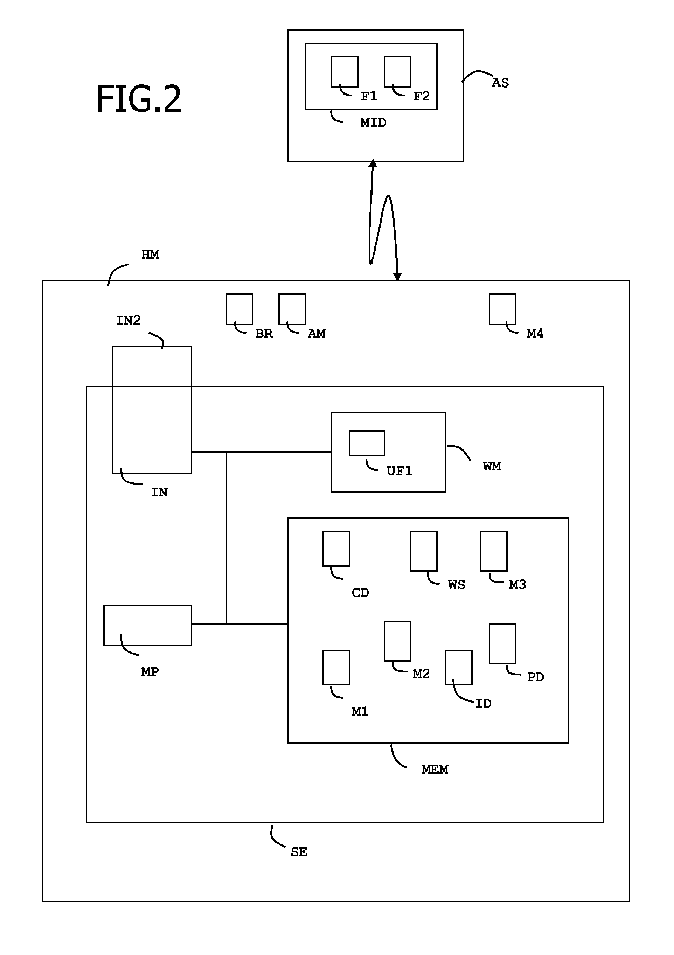

**Figure 2** shows schematically an example of a system comprising an application server AS, a telecom device HM and a connected secure token SE according to the invention. In the example of Figure 2, the telecom device HM is a mobile phone and the secure token SE is a SIM card.

In a preferred embodiment, the secure token SE is a Java Card ®. Figure 2 shows a link with a distant server AS managed by a Mobile Network Operator.

The telecom device HM comprises an application manager AM, a browser BR, and a communication interface IN2 allowing communication with a connected secure token. The device HM also comprises a request means M4 which is adapted to send a message to the connected secure token SE when an application is to be installed on said telecom device HM from the application server AS.

In a preferred embodiment, the token SE may comprise a web portal comprising data allowing to build the message R1. Advantageously, the web portal may be implemented thanks to a smart card web server (SCWS) when the token SE is a smart card. The telecom device HM may have a browser BR which is able to access the web portal. For example the browser BR may connect to the local URL http://127.0.0.1:3516. Thus the browser BR of the telecom device HM may access the web portal and retrieve information related to applications that may be installed into the device HM. For example the Web portal may provide a list of several available applications. The user may select one application and the browser gets the information associated to the selected application. Then the request means M4 build and send the message R1 from the received information associated to the selected application. The information provided by the web portal may contain static links or dynamic links. The dynamic links may be generated on the fly through a javascript for example.

In another embodiment, the telecom device HM may comprise a specific application dedicated to the management of applications to be installed into the device HM. For example, such a specific application may be provided by the Telecom Network Operator associated to the token SE. The specific application may provide the user with an interface allowing to manage both the installation and the life of applications compliant with the telecom device HM. In particular, the specific application may allow to manage the upgrade, the launching or the removing of the applications installed in the telecom device HM.

In the example of Figure 2, the telecom device HM comprises an operating system and a virtual machine able to run Java applications.

Preferably, the application manager AM is an application manager software (AMS) compliant with the Mobile Information Device Profile ® 2.0 specifications. The browser BR is a web browser.

The application MID which is intended to be installed in the device HM is stored into the application server AS. In a preferred embodiment, the application MID is a Java midlet. The application MID is stored on the form of two files F1 and F2. F1 is a JAD file which comprises a descriptor of the application MID and F2 is a JAR file which comprises an executable part of the application MID.

The electronic token SE comprises a working memory WM of RAM type, a non volatile memory MEM, a microprocessor MP and a communication interface IN allowing exchanging data with the connected telecom device HM. The non volatile memory MEM comprises an operating system, a virtual machine, a smart card web server WS, an identity data ID related to a subscriber of a telecom mobile network, a token data CD and three means M1, M2 and M3.

The token data CD may reflect the features which are available in the secure token SE. In one embodiment, the token data CD contains information related to the presence of the smart card web server WS. The means M1 is able to communicate with the connected telecom device HM through the interface IN. The means M2 is able to communicate with a distant server through the connected telecom device HM. The means M3 is able to generate an updated file by adding the token data CD into a file received from a server.

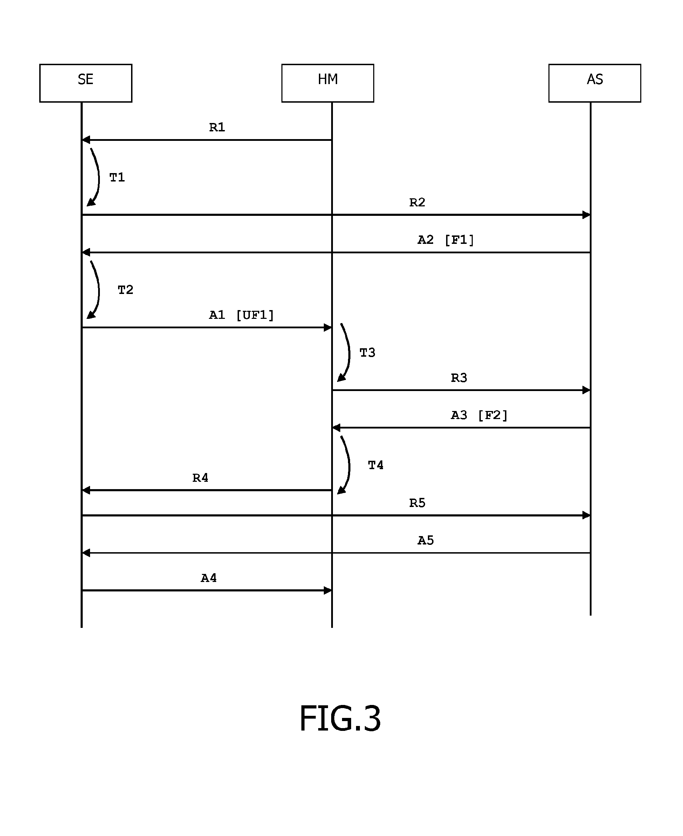

**Figure 3** shows an example of the method for installing an application MID in a telecom device HM according to the invention.

The application MID is assumed to be stored into the distant application server AS.

In the example of Figure 3, the application is a midlet written in Java ® language. The midlet is stored into the server AS thanks to two files F1 and F2. The file F1 is a JAD file and the file F2 is a JAR file. The file F1 contains the address (i.e. URL) where the file F2 can be got and attributes related to the midlet MID. The file F2 contains the java classes corresponding to the application MID.

According to Figure 3, the telecom device HM sends a first message R1 to the secure token SE. The message R1 aims at getting the first file F1. (i.e. the JAD file of the application MID). For example the message R1 may contain the following matter:
Method=GET
URL=http://127.0.0.1:3516/getjad
Data="?url=188.223.23.100/App.jad"
where "127.0.0.1:3516" is the address of the secure token SE, where "188.223.23.100" is the address of the application server AS and "App.jad" is the name of the file F1.

The means M2 analyzes (treatment T1) the received message R1 and identifies the URL to be used for getting the JAD file F1 from the distant server AS. Then the means M2 send a second message R2 to the distant server AS through the connected telecom device HM. The message R2 aims at getting the JAD file F1. For example the message R2 may contain the following matter:
Method=GET
URL=http://188.223.23.100/App.jad
where "188.223.23.100" is the address of the application server AS and "App.jad" is the name of the file F1.

Then the server AS sends a response A2 to the secure token SE through the telecom device HM. The response A2 contains the file F1. For example the file F1 may contain the following matter:
MIDlet-Install-Notify: http://188.223.23.100/install MIDlet-Jar-URL: http://188.223.23.100/App.jar

Then the means M1 analyzes the received file F1 and adds (treatment T2) token data CD into the received file F1. This addition may be performed on the fly into the secure token SE. Thus a new file UF1 is generated from both the file F1 and the token data CD. The new file UF1 is a file of JAD type. Then the means M1 sends the new file UF1 to the connected telecom device HM thanks to a message A1.

For example the new file UF1 may contain the following additional matter:
MIDlet-Install-Notify:http://127.0.0.1:3516/install? id=23&port=5003&notify=188.223.23.100/install
where the part "notify=188.223.23.100/install" is used to notify the server AS after the installation of the application. In particular, this part is used for the messages R5/A5 as described below.

The part "http://127.0.0.1:3516/install? id=23&port=5003" is used to notify the token SE after the installation of the application. In particular, this part is used for the messages R4/A4 as described below.

The updated file UF1 may contain any usual type of JAD attributes. The file F1 may also contain proprietary JAD attributes. The proprietary JAD attributes may contain data which is specific to the token SE. The proprietary JAD attributes may contain data which is stored in the token SE but not associated with the characteristics of the token. (i.e. data not specific to the token SE). For instance, one proprietary JAD attribute may contain the value of a key which is required for completing the installation of the application.

Advantageously, if the file F1 has no notification (MIDlet-Install-Notify) attribute, the means M1 may add a notification JAD attribute targeting the token SE. Thus the token SE will receive a notification after the installation of the application.

The telecom device HM comprises an application manager AM which is able to analyze the content of the message A1. The application manager is able to identify (treatment T3) the data which allows building another message R3 which aims at getting the second file F2 from the distant server AS.

Then the message R3 is sent from the device HM to the server AS via the OTA mechanism as defined by ETSI SCP 102.225 and ETSI-SCP 102.226 standards.

For example the application manager AM may use the "MIDlet-Jar-URL" field of the file F1 for building the message R3. Thus the message R3 may contain the following matter:
Method=GET
URL=http://188.223.23.100/App.jar

Then the server AS sends a message A3 to the telecom device HM in response to the message R3. The message A3 contains the file F2. Since both the JAD and the JAR files of the application are loaded into the device HM, the application manager AM may now fully install (treatment T4) the application MID into the device HM.

In the received file UF1 the field MIDlet-Install-Notify specifies that a notification is needed after the installation. Thus the device HM sends a notification message R4 to the secure token SE. The message R4 aims at providing the secure token SE with result of the application installation operation.

For example the message R4 may be based on a POST method. For instance, the message R4 may contain the following matter for a POST Install Notification:
Method=POST
URL=http://127.0.0.1:3516/install
Data="900 Success"
where "127.0.0.1:3516" is the address of the entity to be notified into the token SE. This entity may be a Web server extension like a servlet for example.

Then the secure token SE routes the notification message to the server AS by generating and sending a message R5 to the server AS.

For example the message R5 may be based on the POST method. For instance, the message R5 may contain the following matter for the POST Install Notification Status:
Method=POST
URL=http://188.223.23.100/install
Data="900 Success"
where "188.223.23.100" is the address of the server AS, "/install" the notification path on the server AS and "900 Success" is the notification data to be sent to the server by the POST method.

Then the server AS sends a message A5 in response to the message R5. The message A5 is sent to the secure token SE via the telecom device HM. The message A5 contains an acknowledgment. For example the message A5 may contain the following matter:
HTTP Ok

The secure token SE receives the message A5. The secure token SE routes the received message A5 to the device HM by sending a message A4 to the telecom device HM. For example the message A4 may contain the following matter if the installation has been successful:
HTTP Ok

The set of four messages R4, R5, A5 and A4 is optional. These four messages are sent only if notifications are requested in the file UF1.

Advantageously, the updated file UF1 may also comprise the following attribute:
MIDlet-Install-Delete:http://127.0.0.1:3516/delete? id=23&port=5003&notify=188.223.23.100/delete
where MIDlet-Install-Delete is a JAD attribute providing the URL(s) to be used for sending a notification of the result of the deletion of the application. (i.e. when the application is uninstalled).

This JAD attribute allow to notify the token SE and the server AS when the application is removed. This JAD attribute contains data allowing to build and to forward the notification to the application server AS. Alternatively, the MIDlet-Install-Delete may contain one URL for notifying the token SE only.

The JAD attribute MIDlet-Jar-URL comprised in the file F1 may contain a relative address. Advantageously, the token SE is able to check the value of the JAD attribute MIDlet-Jar-URL in order to know if the address of the JAR file F2 is a relative address or an absolute address. For instance if MIDlet-Jar-URL contains "http://188.223.23.100/App.jar", the address is an absolute address (i.e. a full URL). If MIDlet-Jar-URL contains "App.jar", the address is a relative address. The "App.jar" value means that the JAR file (i.e. file F2) must be retrieved at the same address than the JAD file (i.e. file F1) by the token SE. The token SE has a means which is able to update the content of the MIDlet-Jar-URL attribute when the address is relative. For example the token SE is able to transform the value "App.jar" into "http://188.223.23.100/App.jar" by adding the base URL of the server AS before the name of the JAR file.

Usually, the JAD file of a midlet is in clear text and is not signed. The JAR file of a midlet may be signed. On the above-described example, the secure token SE can easily generate the file UF1 by updating the file F1 because the file F1 is a JAD file without any associated signature. Moreover a JAD file is usually a text file with a small size. Thus the treatment of the JAD file can be performed by a secure token having limited computing ad memory resources like a smart card.

In another embodiment, the file F1 may be signed. In this case, the corresponding key is assumed to be available for the secure token and the token SE is able to generate a new signature for the updated file UF1.

The JAR file F2 is directly exchanged between the server AS and the device HM. If the file F2 is signed, the key allowing to check to the signature is assumed to be known by the device HM.

In the embodiments of Figures 2-3, the application intended to be installed into the telecom device HM is a Java ® application. The application may be written in any other high level language either interpreted language or executed language. For example, the application may be compliant with the .Net ® framework or may be written in C++ language.

Alternatively, the installation of the application MID may be run without using the OTA mechanism. The telecom device HM may be connected to the distant server AS through any kinds of wireless or contact channels. For example, data may be exchanged between the device HM and the server AS through Internet, or via a Wi-fi ®, Bluetooth ®, NFC ® (Near Field Communication) link or any combinations of these links.

Thanks to the invention, the application to be installed may be adapted by the secure token to a specific use. In particular a large number of existing applications (i.e. already developed) become compatible with a web server embedded in the secure token SE. This result is got without any change on the application server AS.

An advantage of the invention is to allow the secure token SE to store a presence data PD which reflects the fact that the application MID has been installed in the connected telecom device HM. For example, the secure element SE may automatically update its own configuration for taking into account the availability of the application MID in the connected telecom device HM. In particular, the secure token SE may launch the application MID by using the presence data PD. The secure token SE may also manage the upgrade of the application MID by using the presence data PD.

Obviously, the invention may be used for a plurality of applications installed in a telecom device. The invention allows to install applications dedicated to any kind of domain. For example the installed applications may be of any of the following types: gaming, phonebook management, transport, payment, etc. It may also be an application specific to a Telecom operator.

The invention may be used with an electronic secure token welded to a telecom device or to a Machine-To-Machine (M2M) device.

In the above-described examples the secure token is a SIM card. Alternatively, the secure token may be a Universal Integrated Circuit Card (UICC), a hardware token providing SIM features or even a software token providing SIM features.

In the above-described examples the secure token comprises a web server WS. Alternatively, a SIM Tool Kit application embedded in the secure token may take the place of the web server WS.

Advantageously, the application may be a midlet complying with the Mobile Information Device Profile (MIDP) ® 2.0 standard or upper version.

The token data CD which is dynamically added into the original file F1 may be smart card entries or any kind of data stored into the token SE.

For example, the token data may contain the port number to be used for launching the application (port where the application is registered). The token data may contain an identifier generated by the token SE and assigned to the application. The token data may contain information related to the availability of other applications into the token. Thus the token data may comprise a list of AIDs (Application IDentifier) of the applications/services embedded into the token. For instance, the token may have a cryptographic service which may be useful for the application installed into the telecom device HM. The token data may provide the reference or identifier or address of cryptographic services to the application. After the installation step, the application may use the cryptographic services by reaching these services thanks to the reference/identifier/address stored during the installation step.

When the token is a smart card, the token data may also comprise a parameter related to the Telecom network which is stored into the smart card. For example, the token data may provide the application with the handset IMEI (International Mobile Equipment Identity), or Terminal Profiles features or Location information.

In the above described examples, the application server AS is a distant server which is reachable through a network.

The invention also applies to a configuration where the application server AS is embedded into the token SE or into the telecom device HM.

When the application server AS is embedded into the token SE, the JAD file F1 may be retrieved through an internal API of the token. Moreover, the messages of the figure 3 may be replaced with direct access to an internal API.

Alternatively, the generation of the updated file UF1 may be done by replacing the content of a JAD attribute with a new content. The generation of the updated file UF1 may also be done by removing a JAD attribute.

Regardless of the location of the application server AS, the invention relies on the fact that the JAD file F1 is treated by the token SE before the telecom device HM gets it. This treatment consists in adding data into the original JAD file F1 in order to generate an updated JAR file UF1 which is then provided to the telecom device HM. The added data allow to create a link between the token and the application.

The data which is added into the original JAD file may have two distinct roles.

First, the added data may be used for managing the application. In particular, the added data may be used by the application manager AM during the installation step only. Thus the added data may be no longer used during the application execution. In this case, the token SE may have kept information related to the presence of the installed application. The added data may also be used by the application manager AM during the life of the application and the removing of the application.

Second, the added data may be used by the application itself during the execution of the application. In particular, the added data may be applicative data or secret data required for security features or access rights management. Thus the added data may allow the application to interact with the token. The application may use services which are specific to the token. The added data may also allow the application to use the added data without any interaction with the token. Thus the added data may be used for initializing a targeted field of the application during the installation step.

In a preferred embodiment, the added data is stored into the secure token SE and is retrieved from the token memory when needed.

In another embodiment, the added data may be dynamically generated in the token SE when the JAD file F1 is received. The generation of the added data may be performed on the fly by a dedicated means of the token.

## Claims

1. A **method** for installing an application (MID) in a telecom device (HM) from a server (AS), said telecom device (HM) comprising a secure token (SE) which comprises an identity data (ID) related to a subscriber of a telecom mobile network, said server (AS) comprising first and second files (F1, F2), said first file (F1) comprising a descriptor of the application (MID) and said second file (F2) comprising an executable part of the application (MID),
**characterized in that** the method comprises the steps of:
- getting the first file (F1) in the secure token (SE),
- generating an updated file (UF1) by adding a token data (CD) into the first file (F1), said token data (CD) being provided by the secure token (SE), said generating step being performed into the token (SE),
- getting the updated file (UF1) in the telecom device (HM),
- installing the application (MID) in the telecom device (HM) by using said token data (CD).

2. A method according to claim 1, wherein said token data (CD) is used for managing the application (MID).

3. A method according to claim 1, wherein the method comprises the step of:
- using said token data (CD) by the application (MID) when said application (MID) run.

4. A method according to any one of claims 1 to 3, wherein the method comprises the steps of:
- extracting an address by analyzing the updated file (UF1) into the telecom device (HM),
- getting the second file (F2) into the telecom device (HM) by using said address.

5. A method according to 4, wherein the method comprises the further step of:
- after the installing step, sending an installation notification from the telecom device (HM) to the server (AS) via the secure token (SE).

6. A method according to any one of claims 1 to 5, wherein the method comprises the step of:
- storing in the secure token (SE) a presence data (PD) related to the installation of said application (MID) in the telecom device (HM).

7. A method according to claim 6, wherein the method comprises the step of:
- using the presence data (PD) for activating said application (MID) from the secure token (SE).

8. A method according to any one of claims 1 to 7, wherein the secure token (SE) is a smart card and wherein the token data (CD) is related to a Smart Card Web Server.

9. A method according to any one of claims 1 to 8, wherein the telecom device (HM) comprises an application manager (AM) and wherein the installing step is performed by the application manager (AM).

10. A method according to any one of claims 1 to 9, wherein the application (MID) is a Java midlet, the first file (F1) is a Java Application Descriptor file and the second file (F2) is a Java Archive file.

11. A **secure electronic token** (SE) comprising identity data (ID) related to a subscriber of a telecom mobile network, said token (SE) being intended to be connected to a telecom device (HM), said token (SE) comprising a first means (M1) capable of communicating with said telecom device (HM), said token (SE) comprising a second means (M2) capable of communicating with a server (AS) comprising first and second files (F1, F2), said first file (F1) comprising a descriptor of an application (MID) and said second file (F2) comprising an executable part of the application (MID),
**characterized in that** the token (SC) is adapted to provide a token data (CD), **in that** said token (SE) comprises a third means (M3) adapted to generate an updated file (UF1) by adding said token data (CD) into the first file (F1), and **in that** said token (SC) is adapted to send the updated file (UF1) to the telecom device (HM) when the installation of said application (MID) is requested.

12. A secure electronic token (SE) according to claim 11, wherein the token (SE) is a smart card which comprises a Smart Card Web Server (WS) and wherein the token data (CD) is related to the Smart Card Web Server (WS).

13. A secure electronic token (SE) according to any one of claims 11 to 12, wherein said token (SE) is a SIM card or a Universal Integrated Circuit Card.

14. A **telecom device** (HM) comprising a secure electronic token (SE),
**characterized in that** said token (SE) is the token (SE) of claim 11 and **in that** said telecom device (HM) comprises a request means (M4) adapted to send a message (R1) to the token (SE) when an application is to be installed in said telecom device (HM) from a server.
